# EUROPEAN PATENT SPECIFICATION

(11) **EP 2 329 706 B1**
(45) Date of publication and mention of the grant of the patent: **12.02.2014**
(21) Application number: 09756560.0
(22) Date of filing: 09.06.2009
(51) Int. Cl.: A01G 1/00

(54) **A METHOD FOR THE CULTIVATION, CONSERVATION AND INSTALLATION OF PRADO EXPRESS IN GREENHOUSES AND CLOSED FACILITIES TO OBTAIN A NATURAL LAWN CARPET**
VERFAHREN ZUM KULTIVIEREN, AUFBEWAHREN UND LEGEN VON PRADOEXPRESS IN GEWÄCHSHÄUSERN UND GESCHLOSSENEN SYSTEMEN ZUM ERHALT EINES NATÜRLICHEN RASENTEPPICHS
PROCÉDÉ DE CULTURE, DE CONSERVATION, D'ENTRETIEN ET D'INSTALLATION DE "PRAIRIE EXPRESS" DANS DES SERRES OU DES ENCEINTES FERMÉES EN VUE D'OBTENIR UN TAPIS DE GAZON NATUREL

(30) Priority: 10.06.2008 CL 17042008
(43) Date of publication of application: 08.06.2011
(73) Proprietor: Express Grass, L.L.C, Yakima, WA 98902 (US)
(72) Inventor: GAETE, Mario, Alberto, Casas, Puerto Montt (CL)
(74) Representative: Richter Werdermann Gerbaulet Hofmann
(86) International application number: PCT/IB2009/006713
(87) International publication number: WO 2009/150551

(56) References cited:
- WO-A1-92/05683
- GB-A- 1 290 338
- US-A- 4 336 668
- US-A- 4 716 679

## Description

The present invention pertains to a method for the cultivation, conservation, maintenance and installation of prado express in greenhouses or closed premises to obtain natural grass carpets in less time and with a better quality, destined to cover private and public areas in general in a fast, easy and economic way.

Regarding the state of the art, we can mention the patent ES Nº 2.178.578, which claims for a procedure to obtain a transplantable vegetal layer which characterizes for including the following stages:
a) Arrangement of a flexible reticular laminate support over a non-porous surface;
b) Then, coverage of the laminate support with an organic cultivation substrate for the germination of seeds.
c) Distribution of the seed corresponding to the vegetable to be obtained from the support.
d) Maintainance of humidity conditions in the cultivation substrate in order to ensure the germination, root-taking and growth of vegetation until the desired height or density is reached; and
e) Separation of such layer from the non-porous surface in order to transplant it over the surface to be covered.

Claim Nº 2, characterizes the reticular laminate support, which describes a tissue or grid based on organic or natural fibers.

Another invention patent is ES Nº 2.216.714, which claims for a base-layer for supporting grass surfaces consisting on a mix of organic or vegetal compots (3) and rubber granules (2) obtained from the recycling of automotive tires or rubber tires to be determined over a removed substrate or soil a support layer (1) to plant grass (5) which is covered for a fine layer of organic or vegetal compost (4), determining the layer or base layer (1) a buffering mean and drainage for the grass surface.

WO-A-92/05683 discloses a method for growing tall fescue sods on a solid base and harvestable in large rolls. It is provided a method for producing a grass sod having substantially less weight than conventional sod, the method comprising:
(a) placing a layer of a mixture of vegetative stalks upon a root impervious barrier;
(b) infiltrating composted growing medium down into the interstices of the stalk layer;
(c) seeding with perennial grass seed and an annual nurse crop seed;
(d) allowing both the annual nurse crop seed and perennial grass seed to germinate and grow a combined primary root system of perennial grass and root system of nurse crop to knit the stalks and composted materials into a sod; and
(e) harvesting the sod.

Furthermore, US-A-4 336 668 is directed to a method for growing ground covers as sods, comprising establishing parallel spaced row/hill nurseries of ground cover plants which spread laterally by stolons, rhizomes, runners, or tillers, placing plastics sheeting or film on the ground in the spaces between said nurseries, covering said sheeting or film with a growing medium enabling rooting therein by the lateral growth from said nurseries, which growth becomes matted to form a sod, harvesting said sod by cutting off said growth in lines along both edges of the plastic film or sheeting, and removing said sod from between said nurseries.

Regarding the current state of the art, it is possible to find three types of cultivation and installation of grass, both for homes or in great extensions such as parks or sport fields, among others.
**1.- Direct Planting**: The first type includes direct plating in the desired location. This activity has shown to require certain basic knowledge and specially, perseverance in care. The normal process of installation of grass by plating (recommended by ANASAC) is performed in the following way:
   a) **Crush**: crush the soil at a 20 to 30 depth [cm].
   b) **Filter**: filter the soil with a sieve to remove stones and clods.
   c) **Improvement of Soil:** distribute a 2 to 3 [cm] layer of vegetal soil along with a part of fertilizer.
   d) **Level**: rake the land in order to level it and add the soil and fertilizer to the ground trying to keep it as even as possible.
   e) **Compactation**: gently compact the ground with a roller or tamper.
   f) **Sow**: uniformly distribute the seed in the dose recommended in the container randomly or with a sowing machine.
   g) **Cover Seed:** cover the seed with a layer of vegetable soil.
   h) **Compactation**: gently compact the already sown ground with a roller or tamper.
   i) **Irrigation**: irrigate in the form of a fine rain, not allowing the ground to dry the first 25 days in order to ensure a good establishment.
   j) **Cut**: perform the first cut when the grass reaches an 8 to 10 [cm] height, leaving it at a 4 to 5 height [cm].

This type of installation requires an extreme care to avoid the lost of the seed and also to achieve a homogeneous growth of the grass and it also requires an average of 4 to 6 months to grow an optimum grass.

### 2.- Lawn Turf:

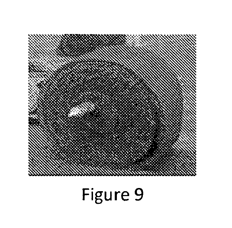

The second type of installation of grass includes the use of lawn turf also called turf. This lawn turfs corresponds to a rectangle of grass with standard measures of 0.5 [m] X 1 [m] with a 2.5 to 4 [cm] layer of soil (See Figure 9). Lawn turfs are extracted through cuts from natural grounds or fields specially sown for this activity.

The installation of lawn turfs is more expensive than planting but it has the advantage to be easily located in any time of the year both for covering broad areas and to repair small areas. Grass planted with turfs is more uniform and have less risk of diseases and weed.

**Installation of Turfs**: The normal process of installation of lawn turfs (as recommended by HOMECENTER) is the following one:
**a) Crush**: crush the soil at a 10 depth [cm].
**b) Filter:** filter the soil with a sieve to remove stones and clods.
c) **Improvement of Soil**: distribute a 2 to 3 [cm] layer of vegetal soil along with a part of fertilizer.
**d) Level**: rake the land in order to level it and add the soil and fertilizer to the ground trying to keep it as even as possible.
**e) Compactation:** gently compact the ground with a roller or tamper.
**f) Irrigation**: irrigate and slightly humidify the ground the day before starting the installation of the turfs.
**g) Installation**: perform the installation of turfs in lines by pressing the surface in order to make the roots contact the soil.
**h) Compactation**: gently compact the already sown ground with a roller or tamper.
**i) Seal:** spread a layer of sand or peat in the spaces that could have been left uncovered in the joints in order to seal them.
**j) Fertilizing:** in order to stimulate the growth of new roots and the recovery of the existent ones, apply a fertilizer rich in nitrogen and phosphorus.
**k) Irrigation**: irrigate in the form of a fine rain, not allowing the ground to dry the first 20 days in order to ensure a good establishment.
l) **Cut:** perform the first cut when the grass reaches an 8 to 10 [cm] height, leaving it at a 4 to 5 height [cm].

It is worth to mention that in this type of installation, the lawn turfs must not be fit by pressing them because they can lose form. Besides, after installing the lawn turfs, the grass can be used immediately, but it is better not to use it in an intensive way in the following two months.

**Productive Turf System:** From a productive point of view, turfs can be obtained in two forms:
a) **Natural Grasslands**: where producers extract turfs and grass grows naturally. It is a regular practice to pay the owners for the soils destined to extraction purposes.
b) **Sowing**: producers seed large extensions of soil where turfs are obtained from. In this case the productive process is the sowing process already described. It is worth to mention that it is a common practice to rent fields for the production and to perform 2 average cuts every year at a ±4 [cm] depth, with a loss of 1,000 tons/ha a year and provoke the degradation of soil which translates into a low sustainability of this production and any other later agricultural activityⁱ. The rented field is used until the soil loses its capacities and productive potential and then the production is transferred to new fields.

**3.- Turf Roll**: the third type of installation considers using turf rolls with the same characteristics of lawn turfs but different mainly in measures, uses and target market. These rolls (see figure 11) correspond to a rectangle of grass with standard measures. The medium size roll is 0.75 [m] X 15 [m] and the large roll is 0.75 [m] X 33 [m]. In both cases, thickness is 2.5 to 4 [cm].

**Installation of Rolls:** The normal process of installation of these rolls is similar to that of turfs, different mainly in the use of special machines such as tractors; skimming shovels and sewing machines (see figures 12 and 13). It is worth to mention that after installing the rolls, grass can be used immediately although an intensive use is not convenient until a month has passed.

c) **Productive System of Rolls**: From a productive point of view, rolls are extracted from fields sown specially for this activity. In this case the productive process is the one already described for the plating of grass. It is worth to mention, that like in the case or turfs, the normal practice is to rent fields for the production until the soil loses its capacities and productive potential and then the production is transferred to new fields.

### Technical Comparison Prado Express v/s Competition

Differentiating elements of **Prado Express** that establish their advantages over the competition come from a comparison among the different types of grass sewing available in the domestic market.

Table 3 resumes the comparison of technical characteristics between **Prado Express** and Direct Sewing, Lawn Turf and Turf Rolls:

**Table 3: Comparative Matrix between Prado Express v/s Competition**

| **Characteristics** | **Sewing** | **Turf** | **Roll** | **Prado Express** |
|---|---|---|---|---|
| **Measures** | ➢ The necessary extension is sown | ➢ Standard area 0.5 [m] X 1 [m] | ➢ Medium size roll: Standard area 0.75 [m] X 15 [m] | ➢ Variable width and length. |
| | | ➢ 2.5 to 4 [cm] thick | ➢ Large Roll: Standard area 0.75 [m] X 33 [m] | ➢ 2 [cm] thick |
| | | | ➢ 2.5 to 4 [cm] thick | |
| **Weight** | ➢ Does not correspond | ➢ 17 [Kg] by every 1 m² average | ➢ 17 [Kg] by every 1 m² average | ➢ 3.5 [Kg] by every 1 m² average |
| **Substrate** | ➢ Field where the sewing process is performed | ➢ Layer of soil from the ground where the turf was obtained | ➢ Layer of soil from the ground where the roll was obtained | ➢ Layer of sawdust |
| **Roots** | ➢ Inserted in the field where the sewing process is performed | ➢ Inserted in the substrate layer | ➢ Inserted in the substrate layer | ➢ Under the substrate layer |
| | | ➢ Cut roots | ➢ Cut roots | ➢ Intact roots |
| | | ➢ It requires recovery period | ➢ It requires recovery period | ➢ It does not require recovery period |
| **Type of lawn** | ➢ It depends on the sewing process | ➢ Natural grass obtained from grass-lands. | ➢ **California Mix**: mix of Festuca and Ballica, a little bit thicker than common grass. It is a high transit grass that remains green all the year. | ➢ **Tehnisan Mix**: High resistance mix specially developed for intensive use places. |
| | | ➢ **California Mix**: mix of Festuca and Ballica, a little bit thick than common grass. It is a high transit grass that remains green all the year. | | |
| | | ➢ **Small Bermuda** (hybrid): Highly resistant and easy to maintain but with a period of winter dormancy when grass turns into a yellow color. | ➢ **Small Bermuda** (hybrid): Highlyresistant and easy to maintain but with a period of winter dormancy when grass turns into a yellow color. | |
| | | ➢ **Golf**: Ballica Perenne, High Festucas and Fine Festucas. Green all year, it requires frequent watering. It tolerates transit very well. It is ideal for small and medium size gardens. It behaves regularly in very dark areas. | ➢ **Golf**: Ballica Perenne, High Festucas and Fine Festucas. Green all year, it requires frequent watering. It tolerates transit very well. It is ideal for small and medium size gardens. It behaves regularly in very dark areas. | |
| **Incorporation of weed** | ➢ It adds weeds | ➢ It incorporates weeds because of being extracted from natural grasslawns of because the production is performed in open fields | ➢ It incorporates weeds because the production is performed in open fields | ➢ It does not add weed because it is produced in greenhouses |
| **Incorporation of Black Cutworm** | ➢ It adds black cutworm if it exists in the ground | ➢ It adds cutworm in the substrate if turf comes from infected fields | ➢ it adds cutworm in the substrate if the roll comes from infected fields | ➢ It does not add cutworm in the substrate |
| **Distribution of lawn** | ➢ Nonuniform distribution | ➢ Uniform distribution with blank spaces | ➢ Uniform distribution with blank spaces | ➢ Uniform distribution without blank spaces |
| **Color tone** | ➢ Yellowish to dark green depending on the sewing time and maintenance care | ➢ Yellowish to dark green depending on the time, type of mix and if it comes from grasslawns or sewing | ➢ Yellowish to dark green depending on the time and type of mix | ➢ Dark green all year |
| **Process of Installation** | ➢ It requires: | ➢ It requires | ➢ It requires | ➢ It requires: |
| | 1. Crush | 1. Crush | 1. Crush | |
| | 2. Filter | 2. Filter | 2. Filter | 1. Level up |
| | 3. Improve Field | 3. Improve Field | 3. Im-prove Field | 2. Fertilizing process |
| | 4. Level up | 4. Level up | 4. Level up | |
| | 5. Compactation | 5. Com-pactation | 5. Compactation | 3. Installation |
| | 6. Sewing | | | 4. Fertilizing proces |
| | 7. Cover Seeds | 6. Watering | 6. Watering | 5. Watering |
| | 8. Compactation | 7. Installation | 7. Installation | 6. Cut |
| | 9. Watering | 8. Compactation | 8. Compactation | |
| | 10. Cut | 9. Sealing process | 9. Sealing process | |
| | | 10. Fertilizing process | 10. Fertilizing process | |
| | | 11. Watering | 11. Watering | |
| | | 12. Cut | 12. Cut | |
| **Installation field** | ➢ It requires a field rich in organic matter | ➢ It requires a field rich in organic matter | ➢ It requires a field rich in organic matter | ➢ It does not requires a field rich in organic matter |
| **Waiting period for high transit** | ➢ 6 months | ➢ 2 weeks for low transit | ➢ 2 weeks for low transit | ➢ 2 weeks for high transit |
| | | ➢ 2 months for high transit | ➢ 1 month for high transit | |
| **Maintenance during installation** | ➢ Do not stand on the sown grass | ➢ Frequent watering | ➢ Frequent watering | ➢ Frequent watering |
| | ➢ New sewing where the seed does not germinate, it was moved because of watering or it has been eaten by birds | ➢ Use of fertilizers to stimulate the recovery of cut roots and growth of lawn | ➢ Use of fertilizers to stimulate the recovery of cut roots and growth of lawn | ➢ Use of fertilizers, just as recommendation to stimulate the growth of lawn |
| | ➢ Frequent watering | | | |
| | ➢ Use of fertilizers | | | |
| **Productive Process** | ➢ It requires: | ➢ It requires: | ➢ It requires: | ➢ It requires: |
| | 1. Crush | 1. Crush | | |
| | 2. Filter | 2. Filter | 1. Crush | 1. Prepare Field |
| | 3. Improve Field | 3. Improve Field | 2. Filter | 2. Sewing |
| | 4. Level up | 4. Level up | 3. Improve Field | |
| | 5. Compactation | 5. Compactation | 4. Level up | 3. Watering |
| | 6. Sewing | 6. Sewing | 5. Compactation | 4. Maintenance |
| | 7. Cover Seeds | 7. Cover Seeds | 6. Sewing | 5. Cut |
| | 8. Compactation | 8. Compactation | 7. Cover Seeds | 6. Harvest |
| | 9. Watering | 9. Watering | 8. Compactation | |
| | 10. Cut | 10. Cut | 9. Water-ing | |
| | | 11. Harvest | 10. Cut | |
| | | | 11. Harvest | |
| **Resistance to storing** | ➢ It does not correspond | ➢ It maintains color for 5 days | ➢ It maintains color for 5 days | ➢ It maintains color for 10 days |
| **Transportation** | ➢ It does not correspond | ➢ It is performed mainly with dry turfs | ➢ It is performed mainly with dry rolls | ➢ It can be performed with both dry and wet carpets |
| | | ➢ Extreme care must be put on not breaking the turf, especially if it is wet | ➢ Extreme care must be put on not breaking the roll, especially if it is wet | ➢ High resistance carpet that does not break with the transportation evenwhen it is wet |
| | | ➢ Particular vehicles to trucks can be used depending on the quantity | ➢ It requires trucks and special machines such as tractors, forklifts, etc. | ➢ Particular vehicles to trucks can be used depending on the quantity |
| **Time of production** | ➢ 4 to 6 months | ➢ 4 to 6 months | ➢ 4 to 6 months | ➢ 2,5 months in Autumn and Winter |
| | ➢ 5 months average | ➢ 5 months average | ➢ 5 months average | ➢1,5 months in Spring and Summer |
| | | | | ➢ 2 months in average |
| **Fields for the Productive Process** | ➢ It is performed in places chosen for performing sewing activities | ➢ It requires even fields and good soil | ➢ It requires even fields and good soil | ➢ It requires even fields |
| | | ➢ When soils stop being good, the productive system is transferred to other fields | ➢ When soils stop being good, the productive system is transferred to other fields | |
| **Sanitary Barriers** | ➢ It has no barriers | ➢ Turfs produced in the north of Eighth Region cannot be sent to the south because of the Sanitary Barrier of SAG that avoids the transference of soils from north to south | ➢ Turfs produced in the north of Eighth Region cannot be sent to the south because of the Sanitary Barrier of SAG that avoids the transference of soils from north to south | ➢ None, because the substrate used is sawdust |
| **Effects on the environment** | ➢ None | ➢ It degrades soils with agricultural potential by performing 2.5 to 4 [cm] depth cuts in a constant way | ➢ It degrades soils with agricultural potential by performing 2.5 to 4 [cm] depth cuts in a constant way | ➢ None because the productive system is based on soils where greenhouses are implemented |

### Advantages of Prado Express

After analyzing the technical factors of alternative types for installation of grass, it is possible to determine that thanks to an innovating productive system, Prado Express has a unique set of characteristics that positions it as a product with strong competitive advantages:
The first set of advantages of Prado Express comes from the characteristics associated with its use as a grass installation:
   a) **Variability of measures:** given the low weight and width of the substrate, Prado Express permits to handle variable sizes of carpets and the installation of an even lawn without separation marks.
   b) **High resistance:** as the carpet maintains 100% of roots intact and forming a grid, Prado Express is highly resistant to ruptures both in the handling, installation and transport processes, even with high percentages of humidity present.
   c) **It does not add both weeds and black cutworm**: thanks to its production in a controlled environment, Prado Express does not add weeds or transport black cutworm to the substrate layer.
   d) **Uniform distribution**: thanks to its production in a controlled environment and the use of spray irrigation, Prado Express provides an even distribution of lawn without blank spaces.
   e) **Grass tone**: thanks to its production in a controlled environment, Prado Express provides an even tone of green all year long.
   f) **Simple and Economic Installation Process**: Since Prado Express maintains 100% of roots, the installation process is shorter because there is no need to improve the ground where the installation will be performed since the carpet does not need fields rich in organic matter. It also avoids the cost of improving the soil.
   g) **Shorter waiting periods for high transit**: since Prado Express is a highly resistant carpet and maintains 100% of its roots in perfect shape, you can have a lawn ready for high transit conditions in no more than 2 weeks. This is a unique characteristic of Prado Express based on the integrity of the roots (they are never cut); therefore, it does not need recovery time and can be inserted rapidly in the ground where it is installed thanks to its Positive Geotropism properties.
   h) **Simple Maintenance**: with Prado Express, maintenance does not require more care than a frequent watering and the optional use of a fertilizer.
   i) **Resistance to storing**: The roots of Prado Express are capable of absorbing the humidity in the environment so it can support up to 10 days in storing conditions and maintain its color.
   j) **Easy Transport and Management:** because of its low weight and high resistance of Prado Express, transport and handling are easy tasks both for mass transport or domestic transport.

The second set of advantages of Prado Express is associated to the productive system:
a) **Innovative Productive Process**: the productive system of Prado Express has been considered by Paiva & CIA Limitadaⁱⁱ as a process susceptible to be patented both in Chile and all over the world, because of its highly innovative level.
b) **Simple Productive Process**: the production process of Prado Express is simple because it does not need to improve the ground where the production will be performed.
c) **Economical Productive Process**: since the productive system of Prado Express does not require fields with good organic conditions, the cost for soils improvement can be avoided. Besides, as it is produced in greenhouses, the lost of seed is only 10%.
d) **Production without seasonality**: Prado Express can be produced in any time of the year maintaining the same conditions.
e) **Short Productive Cycles**: with Prado Express the production time is 1.5 months in spring and summer and 2.5 in autumn and winter permitting a rapid rotation and the possibility of 6 annual harvest as an average.
f) **Mobility of Productive System**: the production system of Prado Express permits Oasis Farm to install production centers in any part of the national territory.
g) **Friendly with the Environment**: The productive system Prado Express does not cause the degradation of soils with agricultural potential because it does not use soils where production is performed.

### Description of Drawings

To understand more clearly the method for the invention of cultivation, conservation, maintenance and installation of prado express in covered places, we will describe it based on drawings part of the description without it restricting the technical characteristics of this method, where:
Fig. 1 shows a view of one cut of the carpet where the plastic sheet can be observed and also the substrate in form of sawdust impregnating the already grown lawn.
Fig. 2 shows a view of the homogeneity and optimum quality of the growth of grass roots, free of impurities.
Fig. 3 shows a view of the rolled portion of lawn.
Fig. 4 shows a lower view of a portion of prado express where the impregnated substrate (sawdust) can be observed impregnated with the grass roots.
Fig. 5 shows a general view of the culture of prado express within a greenhouse.
Fig. 6 shows a view of the front lawn of a house without prado express.
Fig. 7 shows a view of figure 6, where prado express has been installed.
Fig. 8 shows a grid layout of the grass roots with the sawdust substrate and the plastic sheet, the parts that compose this invention.
Fig. 9 shows a lawn turf extracted through cuts to natural grasslawns or fields specially sown for this activity, using the current state of the art.

### Description of Invention

According to the present invention it is provided a method for the cultivation, conservation and installation of grass in greenhouses and closed facilities to obtain a natural lawn carpet, in lower time and with the best quality, destined to cover private and public areas in a fast, easy and economic way, CHARACTERIZED for the cultivation, conservation, maintenance and installation processes including the following stages:
**a)** The surface of the soil in the greenhouse or closed facility is covered with a water-proof surface such as a plastic sheet and then a layer of substrate is placed over it in form of sawdust not higher than 1 [cm] acting as a substrate to fix the seed and uniformly distribute it, avoiding it to move during the productive cycle;
**b)** Then, lawn seeds are spread over the substrate at a rate of 10 to 60 [Kg.] every 1,000 m², and a fertilizer such as NPK at a rate of 100 [Kg.] every 1,000 m²;
**c)** after sewing, the seed is germinated by periodic spray irrigation, from top to bottom, as a maximum frequency of 2 or 3 times a day in spring and summer;
**d)** after the germination of the seed, maintenance is performed based on watering and the use of foliating fertilizer (NPF) once a week;
**e)** After approximately a month after the germination of seeds, a first cut is performed to avoid losing the color of the grass and then it is fertilized again with the same amount of NPK fertilizer;
**f)** When lawn reaches the harvest status, it is removed for installation.

The productive process of this invention for prado express includes the following six stages performed within 1.000 [m²] greenhouses provided with spray irrigation systems and has a soil covered by polyethylene sheets:
1. **Prepare Field**: surface must be level up and flatten for being then covered with plastic sheets (1) and then put a layer of substrate, preferably sawdust (2) not higher than 1 [cm] width acting as a substrate to fix the seed and uniformly distribute it, avoiding it to move during the productive cycle.
2. **Sewing of lawn**: then, lawn seeds are spread over the substrate (3) at a rate of 10 to 60 [Kg.] every 1,000 m², especially 34 [Kg.], and are fertilized with NPK fertilizer at a rate of 100 [Kg.] every 1,000 m².
3. **Watering of lawn**: after sewing, germination of the seed is expected by periodic spray irrigation, from top to bottom, as a maximum frequency of 2 or 3 times a day in spring and summer. In this stage, a spray irrigation system (fog type) is fundamental to obtain a uniform distributed lawn because it avoids that the impact of water drops over the substrate that can spread the seed and generate sections without grass in the carpet.
4. **Maintenance of lawn**: after the germination of the seed, maintenance is performed based on watering and the use of foliating fertilizer once a week. In this stage, plastic sheets over which the substrate and seeds have been placed gain importance because they avoid the roots to insert in the soil and force them to grow horizontally. As they develop, they also keep tangling and forming a grid that provides high resistance to the carpet.
5. **Cut of lawn**: after approximately a month after the germination of seeds, a first cut is performed to avoid losing the color of the grass and then it is fertilized again with the same amount of NPK fertilizer.
6. **Lawn Harvest**: when lawn reaches the harvest status, it is removed for sale. In this case, as the lawn carpet grew over the plastic sheet permitting the roots to tangle and providing an extreme durability, it is enough to cut it with scissors, roll it and remove it.

Complementarily, it is worth to mention that the complete production process of the carpet takes 1.5 months in spring and summer and 2.5 months in autumn and winter.

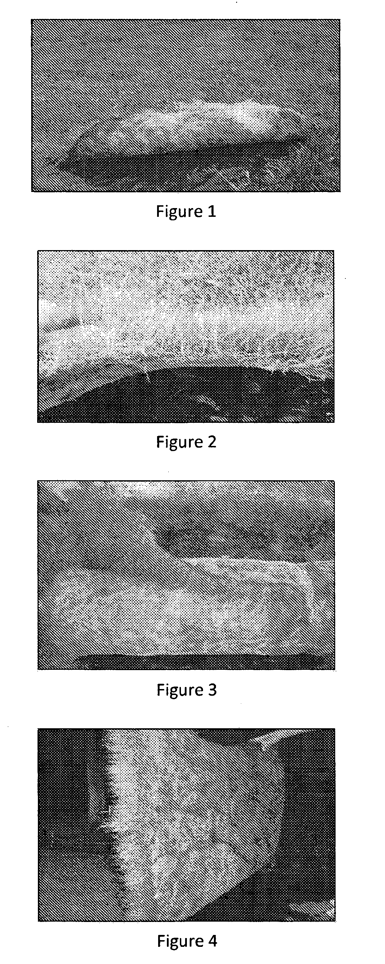

Prado express is supported by a 2 [cm] width and 3.5 [Kg] average weight by m² substrate layer of sawdust and maintains 100% of their roots in perfect shape. They are never damaged during the productive cycle which permits to lower considerably both time and cost of installation by not requiring fine quality fields or time for the recovery of roots, see Figures 1, 2 and 8.

Prado express roots are tangled together forming a kind of grid that provides maximum resistance to the carpet and avoids ruptures at the moment of rolling, transport, installation and transit. Se figures 3, 4 and 8.

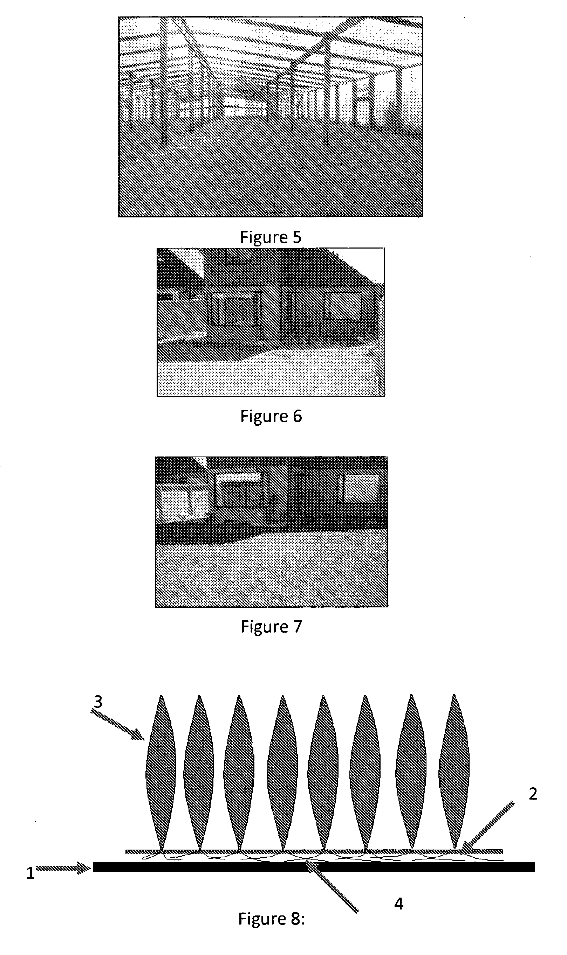

The production of prado express is performed using a substrate of sawdust over plastic sheets in a controlled environment system inside 1,000 [m²] greenhouses with spray irrigation systems and productive cycles of 1.5 months in spring and summer and 2.5 months in autumn and winter. See figure 5.

### Installation Process of Prado Express

Once prado express is ready for use in private and public areas, the installation process is simple and economical, permitting to have a lawn ready for high traffic conditions in no more than two weeks. See figures 6 and 7. Such installation process includes the following stages:
a) **Level up**: level the ground up, removing stones and all type of large size scrap.
b) **Fertilizing process:** it is recommended to spread a minimum portion of NPK fertilizer on the ground.
c) **Installation**: install Prado Express, just unrolling the carpet in the desired location.
d) **Fertilizing process**: it is recommended to spread a minimum portion of NPK fertilizer on the carpet.
e) **Watering:** Water frequently according to the season, considering a maximum of 2 a day in summer.
f) **Cut**: perform a first cut when the grass reaches 8 to 10 [cm] heights, leaving it at 4 to 5 [cm] heights and then fertilize again with NPK fertilizer.

The innovation of Prado Express lays on the development of a productive system that achieves a lawn carpet with 100% its roots intact which permits to have a lawn in high transit conditions in a period no longer than two weeks because its roots does not need a recovery time and are inserted rapidly in the ground where it is installed. Also, the ground where the installation is performed does not need a fine quality soil or special preparation further than level it up because being the roots complete they can adapt to any type of surface. To achieve a lawn carpet with the mentioned characteristics, production is performed on plastic sheets which avoid the roots to insert in the ground and force them to grow horizontally with the roots of other seeds forming a grid together (Figure 8), therefore they suffer no damage in the harvest and arrive intact to the installation place where they recover their vertical position and insert in the ground in an easy and rapid way.

## Claims

1. A method for the cultivation, conservation and installation of grass in greenhouses and closed facilities to obtain a natural lawn carpet, in lower time and with the best quality, destined to cover private and public areas in a fast, easy and economic way, **CHARACTERIZED by** the cultivation, conservation, maintenance and installation processes including the following stages:
**a)** The surface of the soil in the greenhouse or closed facility is covered with a water-proof surface such as a plastic sheet and then a layer of substrate is placed over it in form of sawdust not higher than 1 [cm] acting as a substrate to fix the seed and uniformly distribute it, avoiding it to move during the productive cycle;
**b)** Then, lawn seeds are spread over the substrate at a rate of 10 to 60 [Kg.] every 1,000 m², and a fertilizer such as NPK at a rate of 100 [Kg.] every 1,000 m²
**c)** after sowing, the seed is germinated by periodic spray irrigation, from top to bottom, as a maximum frequency of 2 or 3 times a day in spring and summer;
**d)** after the germination of the seed, maintenance is performed based on watering and the use of foliating fertilizer once a week;
**e)** After approximately a month after the germination of seeds, a first cut is performed to avoid losing the color of the grass and then it is fertilized again with the same amount of NPK fertilizer.
**f)** When the lawn reaches the harvest status, it is removed for installation.

2. A method for the cultivation, conservation and installation of grass in greenhouses and closed facilities according to claim 1, **CHARACTERIZED by** the installation and maintenance method of the lawn carpet including the following stages:
**a)** First of all ground must be level up, removing stones and all type of large size scrap;
**b)** Then irrigate with a minimum portion of NPK fertilizer on the ground;
**c)** Water frequently according to the season, considering a maximum of 2 a day in summer; and
**d)** Perform a first cut when the grass reaches 8 to 10 [cm] heights, leaving it at 4 to 5 [cm] heights.

## Patentansprüche

1. Verfahren zum Kultivieren, zur Erhaltung und zum Anlegen von Gras in Gewächshäusern und geschlossenen Einrichtungen, um einen natürlichen Rasenteppich zu erhalten, in weniger Zeit und von der besten Qualität, der dazu vorgesehen ist, private und öffentliche Bereiche auf schnelle, leichte und ökonomische Art und Weise zu bedecken, **gekennzeichnet durch** Kultivierungs-, Erhaltungs-, Pflege- und Anlageverfahren, welche die folgenden Schritte umfassen:
a) die Oberfläche des Bodens in dem Gewächshaus oder der geschlossenen Einrichtung wird mit einer wasserfesten Unterlage wie etwa einer Plastikfolie bedeckt und dann wird darauf eine Schicht Substrat in Form von Sägemehl ausgebracht, nicht höher als 1 cm, welche als Substrat dient, um die Saat zu fixieren und sie gleichmäßig zu verteilen, wodurch vermieden wird, dass sie sich während des Produktionszyklus bewegt;
b) daraufhin werden Rasensamen in einem Anteil von 10 bis 60 kg pro 1000 m² über das Substrat verteilt sowie ein Dünger wie etwa NPK in einem Anteil von 100 kg pro 1000 m²;
c) nach dem Aussäen wird die Saat **durch** periodische Sprühbewässerung, von oben nach unten, gekeimt, bei einer maximalen Häufigkeit von 2 bis 3 Mal pro Tag im Frühling und im Sommer;
d) nach der Keimung der Saat wird eine Pflege durchgeführt, die auf Bewässerung und dem Einsatz eines Blattdüngers einmal pro Woche beruht;
e) etwa einen Monat nach der Keimung der Samen wird ein erster Schnitt durchgeführt, um zu vermeiden, dass das Gras die Farbe verliert und daraufhin wird es wieder mit derselben Menge an NPK Dünger gedüngt;
f) wenn der Rasen den Erntezustand erreicht, wird er für das Anlegen entfernt.

2. Verfahren zum Kultivieren, zur Erhaltung und zum Anlegen von Gras in Gewächshäusern und geschlossenen Einrichtungen nach Anspruch 1, **gekennzeichnet durch** das Anlage- und Pflegeverfahren des Rasenteppichs, welches die folgenden Schritte umfasst:
a) zunächst muss der Boden ausgeglichen werden, wobei Steine und alle Arten von großen Teilen entfernt werden;
b) daraufhin wird bewässert mit einem minimalen Anteil an NPK Dünger auf den Boden;
c) regelmäßige Bewässerung entsprechend der Jahreszeit, wobei ein Maximum von 2 Mal täglich im Sommer in Betracht gezogen wird; und
d) Durchführen eines ersten Schnittes, wenn das Gras eine Höhe von 8 bis 10 cm erreicht, und Belassen des Grases bei einer Höhe von 4 bis 5 cm.

## Revendications

1. Procédé de culture, de conservation et d'installation d'herbe dans des serres et enceintes fermées pour obtenir un tapis de gazon naturel, en un temps réduit et avec la meilleure qualité, destiné à couvrir des zones privées et publiques rapidement et à moindre coût, **caractérisé par** des procédés de culture, de conservation, d'entretien et d'installation comprenant les étapes suivantes :
a) recouvrement de la surface du sol dans la serre ou l'enceinte fermée d'une surface imperméable telle qu'une feuille de plastique, puis étalement sur ladite surface d'une couche de substrat sous la forme de sciure pas plus haute que 1 cm et servant de substrat pour fixer les graines et les distribuer uniformément, empêchant tout mouvement durant le cycle de production ;
b) épandage subséquent des graines d'herbe sur le substrat à un taux de 10 à 60 kg pour 1000 m² avec un engrais tel que du NPK à un taux de 100 kg pour 1000 m² ;
c) après l'ensemencement, germination des semences par irrigation par pulvérisation périodique de haut en bas, à une fréquence maximale de 2 ou 3 fois par jour au printemps et pendant l'été ;
d) entretien, après la germination des semences, réalisé sur la base de l'arrosage et de l'utilisation d'un engrais foliaire une fois par semaine ;
e) première tonte, approximativement un mois après la germination des semences, réalisée pour éviter de perdre la couleur de l'herbe, puis nouvel apport d'engrais en utilisant la même quantité d'engrais NPK;
f) retrait du gazon pour installation lorsqu'il a atteint le statut de récolte.

2. Procédé de culture, de conservation et d'installation d'herbe dans des serres et enceintes fermées selon la revendication 1, **caractérisé par** le procédé d'installation et d'entretien du tapis de gazon comprenant les étapes suivantes :
a) en premier lieu, nivellement du sol par retrait des cailloux et de tout débris de grande taille ;
b) ensuite irrigation avec un apport minimal d'engrais NPK sur le sol ;
c) arrosage fréquent en fonction de la saison, avec un maximum de deux arrosages par jour en été ; et
d) réalisation d'une première tonte lorsque le gazon atteint une hauteur de 8 à 10 cm, pour le laisser à une hauteur de 4 à 5 cm.
